# EUROPÄISCHE PATENTSCHRIFT

(11) **EP 1 344 749 B1**
(45) Veröffentlichungstag und Bekanntmachung des Hinweises auf die Patenterteilung: **14.06.2006**
(21) Anmeldenummer: 03004367.3
(22) Anmeldetag: 03.03.2003
(51) Int. Cl.: C01G 9/02, C08K 3/22, C08K 9/02, C09D 183/04

(54) **Verfahren zur Herstellung von nano-Zinkoxid-Dispersionen stabilisiert durch hydroxylgruppenhaltige anorganische Polymere**
Process for producing nano zinc oxide dispersions stabilised by hydroxylgroups containing inorganic polymers
Procédé pour la préparation de dispersions de nanoparticules d'oxyde de zinc stabilisées par des polymères inorganiques comprenant des groupes hydroxyles

(30) Priorität: 15.03.2002 DE 10212121
(43) Veröffentlichungstag der Anmeldung: 17.09.2003
(73) Patentinhaber: LANXESS Deutschland GmbH, 51369 Leverkusen (DE)
(72) Erfinder: Marx, Thiemo, Dr., 41749 Viersen (DE); Mager, Michael, Dr., 51375 Leverkusen (DE); Wege, Volker, Dr., 41470 Neuss (DE); Hofacker, Steffen, Dr., 51519 Odenthal (DE)

(56) Entgegenhaltungen:
- EP-A- 0 824 086
- EP-A- 1 146 069
- WO-A-99/21934
- DE-A- 19 907 704

## Beschreibung

Die Erfindung betrifft ein Verfahren zur Herstellung von nano-Zinkoxid-Dispersionen stabilisiert durch hydroxylgruppenhaltige anorganische Polymere.

Die etablierten Herstellungswege für Zinkoxid-Nanopartikel verlaufen entweder über Calzinierungsprozesse geeigneter Precursoren oder über naßchemische Fällungsverfahren. Ein Überblick über die Herstellung von Zinkoxid-Nanopartikeln und die Dispergierbarkeit in Wasser und wasser- und/oder halogenhaltigen organischen Lösemitteln ggf. unter Zusatz von Stabilisatoren wie Betainen, Polyolen oder Aminoalkoholen ist z.B. in DE-A 199 07 704 gegeben

In der EP-A 1 146 069 A2 sind anorganische Beschichtungssysteme auf Basis von nano-ZnO-Partikeln für die UV-Schutzlackierung verschiedener Substrate beschrieben. Die Herstellung der verwendeten nano-ZnO-Partikel bzw. entsprechender Sole erfolgt nach DE-A 199 07 704. In der EP-A 1 146 069 ist ebenfalls beschrieben, dass die nano-ZnO-Partikel mit Alkoxysilanen oberflächenmodifiziert werden können. Die dadurch herstellbaren Dispersionen weisen einen hohen Dispersionsgrad der ZnO-Partikel auf, zeigen allerdings eine sehr begrenzte Lagerstabilität (< 48 h) und weisen hohe Gehalte an halogenierten Kohlenwasserstoffen auf (> 5 Gew.-%).

Nach dem Stand der Technik ist bekannt, das wasserfreie nano-Zinkoxid-Dispersionen, in denen die Partikel primärpartikulär dispers vorliegen, nur dann in organischen Lösungsmitteln herstellbar sind, wenn das Dispergiermedium zusätzlich halogenhaltige Verbindungen wie chlorierte Kohlenwasserstoffe enthält. Halogenierte Komponenten sind jedoch toxikologisch bedenklich und zur Herstellung von Beschichtungen daher ungeeignet. Es ist weiterhin bekannt, dass durch einfachen Lösungsmitteltausch, z.B. durch Zugabe eines höhersiedenden, nichthalogenierten Lösungsmittels und Abdestillieren der halogenhaltigen Bestandteile, nano-Zinkoxid-Dispersionen nicht zugänglich sind. Es kommt dabei stets zu einer irreversiblen Agglomeration der nano-Zinkoxid-Partikel und eine anschließende Herstellung transparenter Beschichtungen wird unmöglich.

Aufgabe der vorliegenden Erfindung war daher die Bereitstellung eines Verfahrens zur Herstellung von nano-Zinkoxid-Dispersionen mit verbesserter Lagerstabilität. Innerhalb einer für eine Vielzahl von Applikationen ausreichend langen Standzeit (Topfzeit) dieser Dispersionen tritt keine Trübung und/oder Flockung der nano-Zinkoxid Dispersionen durch Teilchenaggregation bzw. -agglomeration auf. Ebenso tritt keine Gelierung oder Erstarrung des Systems aus Nanopartikeln und Dispergiermedium (bestehend aus einem oder mehreren Lösemitteln und ggfs. einem Stabilisator) auf. Des weiteren weisen diese einen deutlich verringerten Gehalt an halogenierten Bestandteilen auf.

Gegenstand der vorliegenden Erfindung ist daher ein Verfahren zur Herstellung von Dispersionen von nano-Zinkoxid-Dispersionen, wobei die Lagerstabilität der erhaltenen Dispersionen zwischen -50 und +250°C, vorzugsweise zwischen 0 und 80°C, insbesondere zwischen 10 und 40 °C größer als 48 h ist und die Dispersionen einen Gehalt an halogenierten Bestandteilen von weniger als 5 Gew.-% aufweisen, dadurch gekennzeichnet, dass
A) Zinkoxid-Nanopartikel in einem halogenhaltigen Medium dispergiert werden,
B) die nach A) erhaltene Dispersion gegebenenfalls unter Rühren in eine Lösung hydroxylgruppenhaltiger anorganischer Polymere gegeben wird, und
C) die halogenhaltigen Bestandteile durch Destillation bei Normaldruck oder durch Abkondensieren unter vermindertem Druck weitgehend entfernt. Unter vermindertem Druck werden Drücke zwischen 0 und 1000, vorzugsweise 10 und 300 mbar verstanden.

Im erfindungsgemäßen Verfahren können nano-Zinkoxid-Dispersionen hergestellt werden, deren Lagerstabilität zwischen -50 und +250°C, vorzugsweise zwischen 0 und 80°C, insbesondere zwischen 10 und 40 °C größer als 48 Stunden (zwei Tage) ist. Innerhalb dieser Zeit können in erfindungsgemäß hergestellten Dispersionen keine Gelierungen und/oder Aggregationen bzw. Agglomerationen des nano-Zinkoxids festgestellt werden (z.B. durch transmissions-elektronen-mikroskopische Aufnahmen, TEM).

Unter Lagerstabilität wird erfindungsgemäß die Topfzeit, Standzeit bzw. Gelierzeit verstanden. Innerhalb dieser Zeit ist die Dispersion stabil.

Die Lagerstabilität der erfindungsgemäß hergestellten Dispersionen beträgt mindestens 48 Stunden (2 Tage). Sie sind über Tage, vorzugsweise Wochen, insbesondere über Monate sedimentationsstabil und lagerfähig, ohne dass es zu Entmischung, Ausfällung, Vergelen oder Aushärtung kommt.

Die im erfindungsgemäßen Verfahren eingesetzten Zinkoxid-Nanopartikel haben eine Primärpartikelgröße von 1 bis 500 nm, bevorzugt von 1 bis 100 nm, und besonders bevorzugt von 1 bis 30 nm. Die Agglomeratgröße ist kleiner 10 µm, bevorzugt kleiner 1 µm, und besonders bevorzugt kleiner 0.1 µm. Die eingesetzten Zinkoxid-Nanopartikeln können kristallin, teilkristallin oder amorph sein. Bevorzugt werden röntgenographisch kristalline Zinkoxid-Nanopartikeln eingesetzt.

Die angegebenen Teilchengrößen der ZnO-Partikel beziehen sich auf Ergebnisse aus Ultrazentrifugenmessungen (H.G. Müller, Colloid. Polym. Sci., 267, 1113-1116 (1989)).

Die Herstellung der im erfindungsgemäßen Verfahren eingesetzten dispergierbaren Zinkoxid-Nanopartikel erfolgte beispielsweise nach dem in DE-A 199 07 704 A1 beschriebenen Verfahren. Es können aber auch ZnO-Nanopartikel eingesetzt werden, die durch andere Verfahren hergestellt worden sind.

Die im erfindungsgemäßen Verfahren eingesetzten hydroxylgruppenhaltigen anorganischen Polymere B) enthalten mindestens ein Element der 3. und 4. Hauptgruppe des Periodensystems der Elemente nach Mendelejew, an welches mindestens eine Hydroxylgruppe und zu den Hydroxylgruppen gegebenenfalls zusätzlich noch eine oder mehrere nicht-hydrolysierbare Gruppen gebunden sind. Bevorzugt sind als Elemente der 3. und 4. Hauptgruppe Silicium, Germanium, Bor, Aluminium und/oder Indium, besonders bevorzugt Silicium, Bor und/oder Aluminium.

Anorganische Polymere enthaltend das Element Silicium enthalten bevorzugt zusätzlich nicht-hydrolysierbare Gruppen wie gegebenenfalls substituierte Alkyl- und/oder Arylreste, besonders bevorzugt C₁-C₄-Alkyl- und/oder C₆-Phenylreste, ganz besonders bevorzugt C₁-C₃-Alkylreste.

Die beschriebenen anorganischen Polymere können beispielsweise durch Hydrolyse- und Kondensation monomerer und/oder oligomerer Alkoxysilane bzw. OrganoAlkoxysilane erhalten werden (Sol-Gel-Prozeß). Die Hydrolyse und Kondensation entsprechender Alkoxysilane ist Stand der Technik und z.B. ausführlich beschrieben in "Sol-Gel Science", J. Brinker, 1990.

Zur Herstellung der im erfindungsgemäßen Verfahren eingesetzten anorganischen Polymere können beispielsweise Alkoxysilane der Formel (I) eingesetzt werden,

(Y)ₐ(Y') _{b}Si(OR)_{c} (I)

wobei
- Y, Y': Wasserstoff, ein gegebenenfalls substituierter C₁-C₂₀-Alkyl- oder C₆-Arylrest ist,
- R: ein C₁-C₈-Alkylrest oder ein Phenylrest ist,
a, b und c unabhängig voneinander 0, 1, 2, 3 oder 4 sein können und für
(a+b+c) die Summe = 4 gilt.

Bevorzugt eingesetzt werden Alkoxysilane der Formel (II)

(Y)ₐ(Y')_{b}Si(OR)_{c} (II),

wobei
- Y,Y': ein H, ein C₁-C₈-Alkyl- oder C₆-Arylrest ist,
- R: ein C₁-C₄-Alkylrest oder ein Phenylrest ist,
a, b und c unabhängig voneinander 0, 1, 2 oder 3 sein können und für
(a+b+c) die Summe = 4 gilt.

Im einzelnen seien folgende Alkoxysilane und Organoalkoxysilane genannt:
a.) Si(OCH₃)₄, Si(OC₂H₅)₄;
b.) CH₃-Si(OCH₃)₃, C₂H₅-Si(OCH₃)₃, Phenyl-Si(OCH₃)₃, CH₃-Si(OC₂H₅)₃, C₂H₅-Si(OC₂H₅)₃, Phenyl-Si(OC₂H₅)₃, 3-Glycidoxypropyl-Si(OCH₃)₃, 3-Acetoxypropyl-Si(OCH₃)₃, 3-Methacryloxypropyl-Si(OCH₃)₃, 3-Mercaptopropyl-Si(OCH₃)₃, 3-Cyanopropyl-Si(OCH₃)₃, Isocyanatopropyl-Si(OCH₃)₃, 3-Aminopropyl-Si(OCH₃)₃;
c.) (CH₃)₂Si(OCH₃)₂, (CH₃)₂Si(OC₂H₅)₂, (C₂H₅)₂Si(OCH₃)₂, (C₂H₅)₂Si(OC₂H₅)₂, (n-Butyl)2Si(OC₂H₅)2, (n-Butyl)₂Si(OCH₃)₂, (i-Propyl)₂Si(OC₂H₅)₂, (i-Propyl)₂Si(OCH₃)₂, (CH₃)(Phenyl)Si(OC₂H₅)₂, (CH₃)(Phenyl)Si(OCH₃)₂, (CH₃)(H)Si(OCH₃)₂, (CH₃)(H)Si(OC₂H₅)_{2,} (CH3)(Vinyl)Si(OCH₃)₂, (CH₃)(Vinyl)Si(OC₂H₅)₂, (CH₃)₂Si(O-Phenyl)₂, (C₂H₅)₂Si(O-Phenyl)₂;
d.) (CH₃)₃Si-OCH₃, (CH₃)₃Si-OC₂H₅, (C₂H₅)₃Si-OCH₃, (C₂H₅)₃Si-OC₂H₅, (CH₃)₃Si-OPhenyl, (C₂H₅)₃Si-OPhenyl, (Phenyl)(CH₃)₂SiOCH₃, (Phenyl)(CH₃)₂SiOC₂H₅, (Phenyl)₂(CH₃)SiOCH₃, (Phenyl)₂(CH₃)SiOC₂H₅, (Phenyl)₃SiOCH₃, (Phenyl)₃SiOC₂H₅, (i-Propyl)(CH₃)₂SiOCH₃, (i-Propyl)(CH₃)₂SiOC₂H₅, (i-Propyl)₂(CH₃)SiOCH₃, (i-Propyl)₂(CH₃)SiOC₂H₅, (i-Propyl)₃SiOCH₃, (i-Propyl)₃SiOC₂H₅, (n-Butyl)(CH₃)₂SiOCH₃, (n-Butyl)(CH₃)₂SiOC₂H₅, (n-Butyl)₂(CH₃)SiOCH₃, (n-Butyl)₂(CH₃)SiOC₂H₅, (n-Butyl)₃SiOCH₃, (n-Butyl)₃SiOC₂H₅.

Weitere Beispiele für anorganische Monomere sind polyfunktionelle Alkoxysilane und Silanole der Formel (III)

[(R¹O)ₐY¹₃₋ₐSi]ᵢ-(CH₂)ₖ-X-(CH₂)₁-[SiY²_{3-b}(OR²)_{b}]ⱼ (III)

wobei
- R¹, R²: unabhängig voneinander ein C₁-C₈-Alkyl- und/oder C₆-Arylrest ist,
- Y¹, Y²: unabhängig voneinander ein gegebenenfalls substituierter C₁-C₂₀-Alkyl- oder C₆-Arylrest ist,
- a, b: unabhängig voneinander 1, 2 oder 3 ist,
- i+j: größer oder gleich 2 gilt,
- k, 1: unabhängig voneinander ein ganze Zahl von 0 bis 10 ist, und
- X: eine verbrückende Baueinheit darstellt, an welche eine Anzahl von i+j Alkoxysilylgruppen [(R¹O)ₐY¹₃₋ₐSi] bzw. [SiY²_{3-b}(OR²)_{b}] über eine chemische Bindung gebunden sind.

Selbstverständlich können in das erfindungsgemäße Verfahren auch Mischungen anorganischer Polymere eingesetzt werden, die z.B. durch Hydrolyse- und (Co-) Kondensation verschiedener (Organo-) Alkoxysilane erhalten werden können. Bevorzugt sind dabei Mischungen aus Organosilanen der Formel (IV), YSi(OR)₃ mit Tetraalkoxysilanen der Formel (V), Si(OR)₄, und Mischungen aus Organosilanen der Formel (VI), Y₂Si(OR)₂ mit Tetraalkoxysilanen der Formel (V), wobei Y und R die in Formel (II) angegebene Bedeutung haben.

Hydroxylgruppenhaltige anorganische Polymere enthaltend die Elemente Silicium und Aluminium können in entsprechender Weise erhalten werden, indem man beispielsweise Aluminiumalkoxide mit Alkoxy- und/oder Organoalkoxysilanen hydrolysiert und (co-) kondensiert. Die Herstellung solcher Heterokondensate ist ebenfalls Stand der Technik und z.B. in _{"}Sol-Gel Science", J. Brinker, 1990 beschrieben.

Als Katalysatoren für die Hydrolyse- und Kondensation anorganischer Monomere, Oligomere und Polymere können Säuren, Basen, Metallkomplexe sowie Organometallverbindungen eingesetzt werden. Als Säuren seien beispielsweise p-Toluolsulfonsäure, Salzsäure, Ameisensäure und Essigsäure genannt. Als Basen können z.B. Alkali(Li, Na, K)- und Erdalkali(Mg, Ca, Ba)hydroxide eingesetzt werden. Bevorzugt eingesetzt werden Säuren, besonders bevorzugt in Form 0,1 N bis 1,5 N wässriger Lösungen.

In einer Ausführungsform des erfindungsgemäßen Verfahrens werden zunächst die zur Stabilisierung der Zinkoxid-Nanopartikeln erforderlichen anorganischen Monomere, Oligomere oder Polymere in einem organischen Lösemittel oder Lösungsmittelgemisch gelöst. Durch Zugabe von Wasser und gegebenenfalls eines Katalysators werden diese dann teilweise oder vollständig hydrolysiert, wodurch die Verträglichkeit mit der nach A) herstellten Dispersion verbessert wird. Auf diese Weise werden die hydroxylgruppenhaltigen anorganischen Polymere erhalten. Nach Zugabe der nach A) hergestellten Zinkoxid-Dispersion, bevorzugt unter Rühren (Schritt B)), werden schließlich die halogenhaltigen Bestandteile durch Destillation bei Normaldruck oder durch Abkondensieren im Vakuum entfernt (Schritt C)).

In einer bevorzugten Ausführungform des erfindungsgemäßen Verfahrens werden die eingesetzten anorganischen Monomere und/oder Oligomere nur soweit hydrolysiert, dass ein möglichst lange lagerstabiles, hydroxylgruppenhaltiges anorganisches Polymer erhalten wird. Damit die Hydrolyse und Kondensation nicht zu weit fortschreitet und es schließlich zur Gelierung kommt, wird daher pro Mol hydrolysierbarer Gruppe (z.B. Si-OR, Al-OR, B-OR) bevorzugt nur von 0,1 bis 0,99 Mol Wasser, besonders bevorzugt von 0,3 bis 0,5 Mol Wasser zugegeben. Nach der Dispergierung der Zinkoxid-Nanopartikel in einem halogenhaltigen Medium (Schritt A)) wird die Dispersion dann zu dem so erhaltenen lagerstabilen, hydroxylgruppenhaltigen anorganischen Polymer gegeben (Schritt B)), danach werden die halogenhaltigen Bestandteile destillativ entfernt (Schritt C)).

Im Allgemeinen liegt die Konzentration der Alkoxy- und/oder Hydroxykomponenten im Lösemittel zwischen 1 und 99 Gew.-%, vorzugsweise zwischen 10 und 90 Gew.-%, insbesondere zwischen 30 und 70 Gew.-%. Der Kondensationsgrad der Hydroxy- und/oder hydrolysierten Alkoxygruppen liegt im Allgemeinen zwischen 1 und 99 mol.-%, vorzugsweise zwischen 10 und 90 mol.-%, insbesondere zwischen 30 und 70 mol.-%.

Um die erfindungsgemäßen Dispersionen zu erhalten, werden die Partikel auf die Weise in das oben beschriebene Sol/Gel-Medium eingearbeitet, dass im Allgemeinen in geeignetem Medium vordispergiertes ZnO (z.B. gemäß DE-A 199 07 704 primärpartikulär in CH₂Cl₂/MeOH dispergiertes nano-ZnO) in eine oben beschriebene Lösung eines Sol/Gel-Materials/anorganischen Polymers gegeben wird, so dass ZnO-Konzentrationen von 1 bis 90 Gew.-%, vorzugsweise von 10 bis 50 Gew.-% erhalten werden.

Um den Halogengehalt der erfindungsgemäßen Dispersionen zu reduzieren, kann allgemein das Lösemittel destillativ entfernt werden. Vorzugsweise wird hierfür die Dispersion mit einem organischen Lösemittel versetzt, das mit der erfindungsgemäßen Dispersion mischbar ist, nicht zu Ausflockung des ZnO führt und einen höheren Siedepunkt besitzt als das halogenhaltige Lösemittel. Allgemein können hierfür C₁-C₁₀-Alkohole, vorzugsweise lineare C₄-C₈-Alkohole, insbesondere n-Butanol verwendet werden. Die Masse m des zugesetzten Lösemittels m(Zusatz) richtet sich nach der Masse m des enthaltenen halogenhaltigen Lösemittels m(hLM). Allgemein liegt das Verhältnis von m(Zusatz) zu m(hLM) von 0 bis 100, vorzugsweise von 1 bis 10, insbesondere von 2 bis 5. Die Masse der destillativ zu entfemenden Leichtsieder m(Leichtsieder) richtet sich nach m(Zusatz); für m(Zusatz) ≤ m(hLM) so ist m(Leichtsieder) = m(hLM). Für m(Zusatz) > m(hLM) so ist m(Leichtsieder) = m(Zusatz).

Zur Verbesserung des Dispersionsgrades der Partikel können zum Stand der Technik gehörende Homogenisierungsverfahren verwendet werden, die Geräte wie Hochgeschwindigkeitsrührer (z.B. IKA-Ultra-Turrax® T25 basic, IKA-Werke GmbH & Co KG, D-79219 Staufen), Ultraschalldispergatoren (z.B. UP200S, UP400S, Dr. Hielscher GmbH, D-14513 Berlin) und/oder Strahldispergatoren (Chem. Ing. Tech. (69), 6/97, S. 793-798; EP 07667997) einsetzen.

Die Verdünnung der erfindungsgemäßen Dispersionen kann durch Zugabe von Lösemitteln, vorzugsweise von mono-, bi- oder oligofunktionalen Alkoholen, Estern oder Ketonen erfolgen.

Die erfindungsgemäß hergestellten Dispersionen können z.B. in polymere Werkstoffe und in Beschichtungssysteme, z.B. PUR-, Epoxyd-Harz-Beschichtungen sowie auch in anorganische oder anorganisch/organische Beschichtungen eingearbeitet werden.

In einer besonderen Ausführungsform der Erfindung wird eine organische Modifizierung der Sol/Gel-Matrices durch geeignete Umsetzung reaktionsfähiger Gruppen des anorganischen Polymers wie z.B. Hydroxy-, Epoxy-, Amino-, Acetoxy-, Methacryl-, Thiol- oder Isocyanatgruppen mit passend funktionalisierten organischen Molekülen wie auch Mono-, Oligo- oder Polymeren über Reaktionen die zum Stand der Technik gehören, erreicht. So werden Hybride erhalten, die sich in ihrer Struktur einer breiten Palette verschiedener Matrices anpassen lassen und so eine homogene Einarbeitung der erfindungsgemäß hergestellten Dispersionen in polymere Werkstoffe und Beschichtungssysteme zulassen. Durch Einsatz von geeigneten organischen Bindemitteln/Bindemittelkomponenten wie bi-, tri- ,oligo- oder polyfunktionalen Alkoholen, Aminen, Isocyanaten, Carbonsäuren zur Modifizierung der erfindungsgemäßen Dispersionen werden auch anorganisch/organische Hybridbeschichtungssysteme zugänglich. Die Herstellung rein anorganischerBeschichtungsformulierungen ist z.B. in der EP-A 1 146 069 beschrieben.

### Beispiele

Alle verwendeten Chemikalien wurden, sofern nicht gesondert erwähnt, kommerziell erworben und ohne weitere Reinigung eingesetzt

### Beispiel 1: Herstellung von nano-ZnO nach DE-A 199 07 704

240,35 g Zinkoxid (techn. 99,8 Gew.-%) wurden in 1320 g Methanol (techn. 99,9 Gew.-%) vorgelegt und auf 50°C temperiert. Durch Zugabe von 355,74 g Eisessig (techn. 99,9 Gew.-%) und 51,15 g VE-Wasser wurde der Feststoff gelöst und anschließend auf 60°C temperiert. Zur Beseitigung ungelöster Anteile ZnO wurden in 3 Portionen insgesamt 34,5 g KOH (techn. 90,22 Gew.-%) zugegeben. Der Reaktionsansatz wurde 40 Minuten nachgerührt, mit einer Lösung von 290,00 g KOH (techn. 90,22 Gew.-%) in 660,00 g Methanol versetzt und für 35 min bei 60°C weitergerührt. Abschließend wurde mittels Eisbad auf Raumtemperatur gekühlt und der Rührer abgeschaltet. Nach einer Sedimentationszeit von 14 h hatte sich der Feststoff abgesetzt, die fast klare methanolische Phase wurde abgehoben und 700 g Frischmethanol wieder eingefüllt. Der Reaktionsansatz wurde für 10 min aufgerührt und anschließend nach Abschalten des Rührers wieder für 14 h sedimentieren gelassen. Der methanolische Überstand wurde wiederum abgehoben und die methanolische Feststoffsuspension auf 2 Zentrifugenbecher verteilt. Der Feststoff wurde für 30 min bei 5500 U/min in einer Laborzentrifuge der Fa. Heraeus (Variofuge RF) mit einem Rotor mit 20,4 cm Rotorradius verdichtet und der klare Überstand abdekantiert. Der Feststoffgehalt des Gels betrug 75,8 Gew.-% (Trocknung: 1 h bei 130°C). Eine Elementaranalyse des Trocknungsrückstandes ergab einen Zinkgehalt von 76 Gew.-%, entsprechend 94,6 Gew.-% ZnO.

### Beispiel 2: Herstellung des nano-Zinkoxid Sols- nach DE-A 199 07 704

Ein nach Beispiel 1 hergestelltes Zinkoxid-Gel wurde im Gewichtsverhältnis 1 :1 mit Dichlormethan aufgenommen und für 30 min gerührt. Das transluzente Sol wurde durch Sedimentation für 12 h und Abdekantieren des Sol von abgesetzten Grobpartikeln sowie anschließende Druckfiltration über einen 0,2 µm Cellulosefilter gereinigt. Die Elementaranalyse ergab einen Zinkgehalt von 31 Gew.-%, entsprechend 38,6 Gew.-% ZnO.

### Beispiel 3

Unter Rühren wurden 14,0 g cyclo-{SiO(CH₃)[(CH₂CH₂Si(CH₃)(OC₂H₅)₂]}₄ vorgelegt und mit 26,5 g Tetraethoxysilan sowie 50,0 g 1-Methoxy-2-propanol versetzt. Anschließend wurde 3,4 g wässrige p-Toluolsulfonsäure-Lösung (0,1 n) zugegeben. Nach 30-minütigem Nachrühren wurde 30,5 g eines nach Beispiel 2 hergestellten nano-ZnO-Dichlormethan-Sols zugegeben. Es wurde für 15 min. weitergerührt, und mit einer Lösung aus 7,89 g Aluminiumtributylat, 4,2 g Acetessigester und 2,6 g 1-Methoxy-2-propanol versetzt und für 30 min. weitergerührt. Die so erhaltene Dispersion war über Monate sedimentationsstabil, transluzent und wies keine Tendenz zum Vergelen auf. Angefertigte TEM-Aufnahmen der Partikel dieser Dispersion belegen den hochdispersen Zustand der Partikel, die bestimmt durch Ultrazentrifugenmessungen zu > 98 % eine zahlenmittlere Partikelgröße von 5 bis 30 nm aufweisen.

### Beispiel 4

Zur Minderung des CH₂Cl₂-Gehaltes einer in Beispiel 3 beschriebenen Dispersion, wurden 60 g n-Butanol zugegeben und anschließend bei 50°C und 200 mbar 60 g Leichtsieder abdestilliert. So wurde der CH₂Cl₂-Gehalt auf 0,04 Gew.-% reduziert. Die Lagerstabilität der Dispersion wurde durch diesen Lösemitteltausch nicht beeinträchtigt.

### Beispiel 5

2,5 g 1-Methoxy-2-propanol wurden unter Eiskühlung mit 9,8 g Aluminium-tri-secbutoxid versetzt. Anschließend wurden 6,7 g Acetessigsäureethylester zugesetzt und es wurde noch eine halbe Stunde unter Eiskühlung nachgerührt. Dann wurde auf 60°C erwärmt und es wurden innerhalb von 5 h 21,0 g einer 35 %-igen Lösung von cyclo-{SiO(CH₃)[(CH₂CH₂Si(CH₃)₂OH]}₄, hergestellt wie in US 5,880,305, beschrieben, in 1-Methoxy-2-propanol zugegeben. Nach beendeter Zugabe wurde unter Rühren auf Raumtemperatur abgekühlt. Dann wurden nacheinander 23,2 g Tetraethylorthosilicat, 20,1 g n-Butanol und 2,0 g wässrige 0,1 normale p-Toluolsülfonsäure zugegeben. Nach einer Nachrührzeit von 60 min wurde 37,9 g eines nach Beispiel 2 hergestellten nano-ZnO-Dichlormethan-Sols zugegeben. Die so erhaltene Dispersion war über Monate sedimentationsstabil, transluzent und wies keine Tendenz zum Vergelen auf. Angefertigte TEM-Aufriahmen der Partikel dieser Dispersion belegen den hochdispersen Zustand der Partikel, die bestimmt durch Ultrazentrifugenmessungen zu > 98 % eine zahlenmittlere Partikelgröße von 5 bis 30 nm aufweisen.

### Beispiel 6

9,2 g Tetraethoxysilan wurden in 9,2 g 1-Methoxy-2-propanol gelöst und anschließend mit 1,6 g wässriger p-Toluolsulfonsäure-Lösung (0,1 n) versetzt. Es wurde für 3 Stunden weitergerührt und dann mit 10,0 g eines nach Beispiel 2 hergestellten nano-ZnO-Dichlormethan-Sols versetzt. Es wurde 5 min nachgerührt und abschließend mit 5 g 3-Glycidoxypropyltrimethoxysilan versetzt. Die so erhaltene Dispersion war über Monate sedimentationsstabil, transluzent und wies keine Tendenz zum Vergelen auf. Angefertigte TEM-Aufnahmen der Partikel dieser Dispersion belegen den hochdispersen Zustand der Partikel, die bestimmt durch Ultrazentrifugenmessungen zu > 98 % eine zahlenmittlere Partikelgröße von 5 bis 30 nm aufweisen.

### Beispiel 7

9,2 g Tetraethoxysilan wurden in 9,2 g 1 -Methoxy-2-propanol gelöst und anschließend mit 1,6 g wässriger p-Toluolsulfonsäure-Lösung (0,1 n) versetzt. Es wurde für 3 Stunden weitergerührt und dann mit 10,0 g eines nach Beispiel 2 hergestellten nano-ZnO-Dichlormethan-Sols versetzt. Es wurde 5 min nachgerührt und abschließend mit 5 g 3-Methacryloxypropyltrimethoxysilan versetzt. Die so erhaltene Dispersion war über Monate sedimentationsstabil, transluzent und ließ keine Tendenz zum Vergelen erkennen. Angefertigte TEM-Aufnahmen der Partikel dieser Dispersion belegen den hochdispersen Zustand der Partikel, die bestimmt durch Ultrazentrifugenmessungen zu > 98 % eine zahlenmittlere Partikelgröße von 5 bis 30 nm aufweisen.

### Beispiel 8

9,2 g Tetraethoxysilan wurden in 9,2 g 1 -Methoxy-2-propanol gelöst und anschließend mit 1,6 g wässriger p-Toluolsulfonsäure-Lösung (0,1 n) versetzt. Es wurde für 3 Stunden weitergerührt und dann mit 10,0 g eines nach Beispiel 2 hergestellten nano-ZnO-Dichlormethan-Sols versetzt. Es wurde 5 min nachgerührt und abschließend 5 g 3-Acetoxypropytrimethoxysilan hinzugegeben. Die so erhaltene Dispersion war über Monate sedimentationsstabil, transluzent und ließ keine Tendenz zum Vergelen erkennen. Angefertigte TEM-Aufhahmen der Partikel dieser Dispersion belegen den hochdispersen Zustand der Partikel, die bestimmt durch Ultrazentrifügenmessungen zu > 98 % eine zahlenmittlere Partikelgröße von 5 bis 30 nm aufweisen.

### Beispiel 9

Der Dichlormethangehalt der in den Beispielen 5 bis 8 beschriebenen Dispersion wurde durch Zugabe von 13,6 g n-Butanol und anschließendes destillatives Erlernen von 13,6 g Leichtsieder bei 50°C und 200 mbar auf unter 0,05 Gew.-% (gaschromatographisch bestimmt) gesenkt.

Die Lagerstabilität der Dispersionen wurde hierdurch nicht verändert.

### Beispiel 10

5,16 g eines Polyacrylatpolyols mit einem OH-Gehalt nach DIN 53 240/2 von 3,2 ± 0,4 % (Desmophen A665BA, 70 Gew.-%-ig in Butylacetat, Bayer AG) wurden in 5,23 g 1-Methoxy-2-propanol gelöst. Nach 5 minütigem Rühren wurden 32,76 g einer nach Beispiel 7 hergestellten und nach Beispiel 9 umgearbeiteten nano-ZnO-Dispersion zugegeben. Das Produkt wurde 10 Minuten nachgerührt; es wurde eine transluzente langzeitstabile Dispersion erhalten.

## Patentansprüche

1. Verfahren zur Herstellung von nano-Zinkoxid-Dispersionen, wobei die Lagerstabilität der erhaltenen Dispersionen bei Temperaturen zwischen -50 und +250°C, vorzugsweise zwischen 0 und 80°C, insbesondere zwischen 10 und 40 °C größer als 48 h ist und die Dispersionen einen Gehalt an halogenierten Bestandteilen von weniger als 5 Gew.-% aufweisen, **dadurch gekennzeichnet, dass**:
A) Zinkoxid-Nanopartikel in einem halogenhaltigen Medium dispergiert werden,
B) die nach A) erhaltene Dispersion gegebenenfalls unter Rühren in eine Lösung hydroxylgruppenhaltiger anorganischer Polymere gegeben wird, und
C) die halogenhaltigen Bestandteile durch Destillation bei Normaldruck oder durch Abkondensieren unter vermindertem Druck entfernt werden.

2. Verfahren nach Anspruch 1, **dadurch gekennzeichnet, dass** die hydroxylgruppenhaltigen anorganischen Polymere B) mindestens ein Element der 3. und 4. Hauptgruppe des Periodensystems der Elemente nach Mendelejew enthalten, an welches mindestens eine Hydroxylgruppe und gegebenenfalls zusätzlich noch eine oder mehrere nicht-hydrolysierbare Gruppe gebunden ist.

3. Verfahren nach Anspruch 1, **dadurch gekennzeichnet, dass** die Zinkoxidpartikel primärpartikulär dispergiert vorliegen.

4. Verfahren nach Anspruch 1, **dadurch gekennzeichnet, dass** die Zinkoxid-Nanopartikel in einem Größenbereich von 1 bis 500 nm liegen.

## Claims

1. Process for the preparation of nano-zinc oxide dispersions, where the storage stability of the resulting dispersions at temperatures between -50 and +250°C, preferably between 0 and 80°C, in particular between 10 and 40°C, is greater than 48 h, and the dispersions have a content of halogenated constituents of less than 5% by weight, **characterized in that**:
A) zinc oxide nanoparticles are dispersed in a halogen-containing medium,
B) the dispersion obtained as in A) is added, optionally with stirring, to a solution of hydroxyl group-containing inorganic polymers, and
C) the halogen-containing constituents are removed by distillation at atmospheric pressure or by condensation under reduced pressure.

2. Process according to Claim 1, **characterized in that** the hydroxyl group-containing inorganic polymers B) contain at least one element from the 3rd and 4th main group of the Mendeleev Periodic Table of the Elements to which at least one hydroxyl group and, in addition, optionally one or more further nonhydrolysable groups are bonded.

3. Process according to Claim 1, **characterized in that** the zinc oxide particles are present in the form of a primary particle dispersion.

4. Process according to Claim 1, **characterized in that** the zinc oxide nanoparticles are in a size range from 1 to 500 nm.

## Revendications

1. Procédé de préparation de dispersions de nanoparticules d'oxyde de zinc, dans lequel la stabilité au stockage des dispersions obtenues à des températures comprises entre -50 et +250°C, de préférence entre 0 et 80°C, en particulier entre 10 et 40°C, est de plus de 48 heures et les dispersions présentent une teneur en constituants halogénés inférieure à 5 % en poids, **caractérisé en ce que** :
A) des nanoparticules d'oxyde de zinc sont dispersées dans un milieu halogéné,
B) la dispersion obtenue en A) est ajoutée, éventuellement en agitant, à une solution de polymères inorganiques renfermant des groupes hydroxyle, et
C) les constituants halogénés sont éliminés par distillation à la pression normale ou par condensation sous pression réduite.

2. Procédé selon la revendication 1, **caractérisé en ce que** les polymères inorganiques renfermant des groupes hydroxyle B) renferment au moins un élément du 3ème et 4ème groupe principal du Tableau Périodique des Eléments de Mendeleer, auquel au moins un groupe hydroxyle et en outre éventuellement un ou plusieurs groupes non hydrolysables sont liés.

3. Procédé selon la revendication 1, **caractérisé en ce que** les particules d'oxyde de zinc sont présentes sous la forme d'une dispersion de particules primaires.

4. Procédé selon la revendication 1 **caractérisé en ce que** les particules d'oxyde de zinc sont dans une plage granulométrique de 1 à 500 nm.
